# EUROPÄISCHE PATENTANMELDUNG

(11) **EP 4 835 811 A1**
(43) Veröffentlichungstag der Anmeldung: **04.11.2026**
(21) Anmeldenummer: 26162017.3
(22) Anmeldetag: 03.03.2026
(51) Int. Cl.: G06T 7/00, G06T 7/11

(54) **VORRICHTUNG ZUM ERKENNEN VON FEHLSTELLEN EINER VERPACKUNG UND/ODER EINES PRODUKTES**

(30) Priorität: 30.04.2025 DE 102025116757; 06.10.2025 DE 102025140602
(71) Anmelder: MULTIVAC Marking & Inspection GmbH & Co. KG, 32130 Enger (DE)
(72) Erfinder: ISAAK, Dennis, 32130 Enger (DE); SIEKMANN, Daniel, 32130 Enger (DE)
(74) Vertreter: Grünecker Patent- und Rechtsanwälte PartG mbB

(57) **Zusammenfassung**

Vorrichtung (100) zum Erkennen von Fehlstellen einer Verpackung und/oder eines Produktes (130), die Vorrichtung umfassend eine Infrarot-Lichtquelle (101), einen Infrarotdetektor (102) und eine Auswerteinrichtung (104), wobei der Infrarotdetektor und die Infrarot-Lichtquelle so angeordnet sind, dass der Infrarotdetektor ein Bild einer Verpackung und/oder eines Produktes (130) in Auflicht und/oder Durchlicht aufnehmen kann, und wobei die Auswerteinrichtung (104) ausgebildet ist, das Bild zu verarbeiten und mittels eines Bereichserkennungsalgorithmus (143) das verarbeitete Bild auszuwerten und zu bestimmen, ob eine Gruppe von zusammenhängenden Bereichen im verarbeiteten Bild für jeden Bereich einen Bildwert oberhalb oder unterhalb eines Schwellwertes aufweist, und eine für eine Fehlstelle indikative Information (144) auszugeben, wenn im verarbeiteten Bild wenigstens eine Gruppe von zusammenhängenden Bereichen vorhanden ist, für die jeder Bereich einen Bildwert oberhalb oder unterhalb des Schwellwertes aufweist.

## Beschreibung

Die vorliegende Erfindung betrifft eine Vorrichtung zum Erkennen von Fehlstellen einer Verpackung und/oder eines Produktes gemäß Anspruch 1 sowie ein Verfahren zum Erkennen von Fehlstellen einer Verpackung und/oder eines Produktes entsprechend Anspruch 9.

### Stand der Technik

Aus dem Stand der Technik sind Vorrichtungen und Verfahren zum Prüfen von Verpackungen oder Produkt auf Fehlstellen bekannt. Diese umfassen üblicherweise komplexe Analysen wie beispielsweise Hyperspektralanalysen, Radar-Imaging oder bildgebende Verfahren mit Röntgenstrahlung. Die hierfür eingesetzten Vorrichtungen wie beispielsweise Röntgenstrahler sind kostenintensiv. Gleichzeitig ist die Auswertung der aufgenommenen Bildinformationen schwierig und mit Fehlern behaftet.

### Aufgabe

Ausgehend vom bekannten Stand der Technik besteht die zu lösende technische Aufgabe somit darin, eine Vorrichtung und ein Verfahren zum Erkennen von Fehlstellen von Verpackungen und/oder Produkten anzugeben, die kostengünstig realisiert werden können und gleichzeitig Fehlstellen möglichst zuverlässig erkennen.

### Lösung

Diese Aufgabe wird erfindungsgemäß durch die Vorrichtung zum Erkennen von Fehlstellen einer Verpackung und/oder eines Produktes gemäß Anspruch 1 sowie das Verfahren zum Erkennen von Fehlstellen einer Verpackung und/oder eines Produktes gemäß Anspruch 9 gelöst. Vorteilehafte Weiterbildungen der Erfindung sind in den Unteransprüchen erfasst.

Erfindungsgemäß ist eine Vorrichtung zum Erkennen von Fehlstellen einer Verpackung und/oder eines Produktes vorgesehen, die Vorrichtung umfassend eine Infrarot-Lichtquelle, einen Infrarotdetektor und eine Auswerteinrichtung, wobei der Infrarotdetektor und die Infrarot-Lichtquelle so angeordnet sind, dass der Infrarotdetektor ein Bild einer Verpackung und/oder eines Produktes in Auflicht und/oder Durchlicht aufnehmen kann, und wobei die Auswerteinrichtung ausgebildet ist, das Bild zu verarbeiten und mittels eines Bereichserkennungsalgorithmus das verarbeitete Bild auszuwerten und zu bestimmen, ob eine Gruppe von zusammenhängenden Bereichen im verarbeiteten Bild für jeden Bereich einen Bildwert oberhalb oder unterhalb eines Schwellwertes aufweist, und eine für eine Fehlstelle indikative Information auszugeben, wenn im verarbeiteten Bild wenigstens eine Gruppe von zusammenhängenden Bereichen vorhanden ist, für die jeder Bereich einen Bildwert oberhalb oder unterhalb des Schwellwertes aufweist.

Unter einem verarbeiteten Bild ist grundsätzliche jede Form der Verarbeitung des Bildes zu verstehen, die zumindest einen Teil der Bildinformation erhält oder derart eineindeutig umwandelt, dass die ursprüngliche Bildinformation wiedererlangt werden kann. Unter der Verarbeitung des Bildes ist somit auch die "identische" Verarbeitung zu verstehen, die beispielsweise lediglich umfasst, dass das ursprüngliche Bild in ein (Datei)-format übersetzt wird, das von dem Bildverarbeitungsalgorithmus verarbeitet werden kann. Aber auch andere Formen der Verarbeitung, beispielsweise ein definiertes Erhöhen oder Verringern des Kontrastes oder ein definiertes Verändern von Farbwerten oder Grauwerten des ursprünglichen Bildes zum Erlangen des verarbeiteten Bildes sind denkbar. Von dem Begriff des verarbeiteten Bildes nicht umfasst sind denkbare Umwandlungen des Bildes derart, dass keinerlei ursprüngliche Bildinformation erhalten bleibt und/oder solche Umwandlungen, bei denen die ursprüngliche Bildinformation in nicht rücktransformierbarer Weise umgewandelt wird, also auf eine Weise, die ein zurückrechnen auf die ursprüngliche Bildinformation unmöglich machen. Zu letzteren können beispielsweise solche Umwandlungen zählen, die von neuronalen Netzen bei der Mustererkennung in Bildern durchgeführt werden.

Unter dem Bildwert ist ein Wert, der einem Pixel des verarbeiteten Bildes zugeordnet ist, zu verstehen, wie etwa ein Farbwert, ein Grauwert, ein Helligkeitswert oder ähnliches. Es kann sich bei dem Bildwert aber auch um einen Wert handeln, der aus der funktionalen Verknüpfung von Bildwerten zweier Pixel, etwa nächster Nachbarn, ermittelt wird, wie beispielsweise eine Differenz der oben angeführten Bildwerte zweier Pixel.

Dass die Vorrichtung zum Erkennen von Fehlstellen einer Verpackung und/oder eines Produktes ausgebildet ist, ist im Sinne der Erfindung so zu verstehen, dass die Vorrichtung genutzt werden kann, um Fehlstellen einer Verpackung oder Fehlstellen eines Produktes oder Fehlstellen einer Verpackung mit einem darin eingebrachten Produkt feststellen zu können. Zu solchen Fehlstellen können beispielsweise Fehler des Produktes (unzureichende Qualität eines Lebensmittels oder Hinweise auf Verfall des Lebensmittels) oder Fehlstellen einer verschlossenen Verpackung, wie beispielsweise Fehlstellen einer Siegelnaht aufgrund von im Bereich der Siegelnaht befindlichem Produkt oder andere Verunreinigungen im Bereich der Siegelnaht, vorgesehen sein. Die Erfindung ist jedoch hinsichtlich der Art der Fehlstellen oder der Art der Verpackungen oder der Produkte nicht beschränkt.

Unter den Produkten können grundsätzlich beliebige Produkte verstanden werden. Bevorzugt sind jedoch insbesondere Lebensmittel, wie beispielsweise Wurstaufschnitt oder Käseaufschnitt, sowie Teig oder Produkte in der Pharmaindustrie, wie beispielsweise Tabletten, oder Medizinprodukte, wie beispielsweise Katheter, Nadeln oder chirurgische Instrumente vorgesehen. Die Verpackungen, in die diese Produkte abgefüllt oder eingebracht werden können, können beispielsweise flexible Verpackungen (insbesondere Folienbeutel) oder zumindest teilweise formstabile oder starre Verpackungen umfassen. Als formstabile Verpackungen sollen solche Verpackungen verstanden werden, die zumindest teilweise mittels einer Tiefziehmaschine hergestellt wurden. Solche Verpackungen umfassen üblicherweise eine tiefgezogene Verpackungsmulde, in die Produkt eingelegt ist, und eine Deckfolie, die mit der Verpackungsmulde zum Verschließen der Verpackung gesiegelt wurde. Zumindest die Verpackungsmulde ist dabei üblicherweise so ausgebildet, dass sie unter dem bloßen Einfluss der Schwerkraft und ohne äußere Einwirkung ihre Form beibehält (mit oder ohne eingefülltes Produkt) und somit im obigen Sinne formstabil ist. Unter starren Verpackungen sind solche Verpackungen zu verstehen, die sich im üblichen Gebrauch nicht verformen, insbesondere auch etwa beim Öffnen einer Deckfolie der Verpackung zumindest teilweise hinsichtlich ihrer Form erhalten bleiben. Ein Beispiel einer solchen starren Verpackung ist eine Verpackung, die aus einer Verpackungsmulde aus Kunststoff und einer Siegelfolie besteht, in Fachkreisen auch "Trays" oder "Schalen" genannt. Die Verpackungsmulde ist in diesem Fall üblicherweise durch Tiefziehen hergestellt und somit im Wesentlichen starr, wohingegen die Siegelfolie flexibel bzw. weniger starr ist.

Unter den Bereichen kann im erfindungsgemäßen Sinne eine Gruppe von Pixeln verstanden werden. Die Anzahl der Pixel ist nicht beschränkt und kann auch 1 betragen, sodass ein Bereich gleich einem Pixel des verarbeiteten Bildes sein kann.

Der Bereichserkennungsalgorithmus verarbeitet bevorzugt nur das verarbeitete Bild. Unter einer Gruppe von zusammenhängenden Bereichen, die von dem Bereichserkennungsalgorithmus erkannt werden, ist dabei zu verstehen, dass diese Bereiche zumindest paarweise im verarbeiteten Bild aneinandergrenzen. Wird das verarbeitete Bild als Matrix A mit entsprechenden Einträgen Aᵢⱼ für jeden Pixel dargestellt, bedeutet dies, dass unter einer Gruppe von Bereichen solche Bereiche zu verstehen sind, bei denen jeweils wenigstens zwei Bereiche Matrix-Einträgen entsprechen, die unmittelbar benachbart sind. Dies gilt beispielsweise für Bereiche bzw. Elemente der Matrix Aᵢⱼ und Aᵢⱼ₊₁ , nicht jedoch für Bereiche Aᵢⱼ und Aᵢⱼ₊₂ , da diese durch den Bereich bzw. das Matrixelement Aᵢⱼ₊₁ voneinander getrennt sind. Insoweit untersucht der Bereichserkennungsalgorithmus das verarbeitete Bild daraufhin, ob es Gruppen von Bereichen gibt, die zusammenhängen und gleichzeitig für jeden dieser Bereiche der Bildwert oberhalb oder unterhalb eines festgelegten Schwellwerts ist.

Der Schwellwert ist als solcher Wert zu verstehen, der als indikativ dafür angesehen wird, dass in dem betreffenden Bereich eine Fehlstelle vorliegt. Werden die Bildwerte in dem verarbeiteten Bild beispielsweise als (reelle) Zahlen zwischen 0 und 1 angegeben, so kann vorgesehen sein, dass, wenn die Werte oberhalb eines (beispielsweise empirisch bestimmten) Schwellwertes von 0,6 liegen, eine Fehlstelle vorliegt. Je nachdem, welche Art von Bildwert untersucht wird, kann jedoch auch vorgesehen sein, dass eine Fehlstelle vorliegt, wenn die Bildwerte unter diesem Schwellwert liegen. Die Erfindung ist hinsichtlich des Schwellwertes jedoch nicht beschränkt und die Wahl des Schwellwertes (ebenso wie die Anzahl der Bereiche, die in dem zusammenhängenden Bereich vorhanden sein müssen) kann von äußeren Bedingungen abhängen, wie beispielsweise einem Bestreben, Verpackungen eher wegen fälschlicherweise positiv erkannter Fehlstellen auszusortieren (falsch positive Erkennung), als das Risiko einzugehen, dass eine Verpackung trotz nicht erkannter Fehlstelle (falsch negative Erkennung) weiterverwendet wird.

Mit der erfindungsgemäßen Vorrichtung wird eine technisch effiziente Bestimmung einer Fehlstelle realisiert, da das ursprüngliche Bild direkt durch Verwendung eines geeigneten Bereichserkennungsalgorithmus auf Fehlstellen hin untersucht wird. Durch diese Ausgestaltung sowie die Verwendung eines Infrarotbildes können Kosten reduziert werden. Dabei ist vor allem die Verwendung von Infrarotlicht vorteilhaft, da hiermit eine Prüfung von im sichtbaren Spektralbereich undurchsichtigen Bereichen der Verpackung möglich ist.

Es kann vorgesehen sein, dass das verarbeitete Bild zumindest einen Teil der Bildinformation des Bildes umfasst. Die Bildinformation ist dabei die ursprüngliche Bildinformation, sodass das verarbeitete Bild diese zumindest teilweise erhält. Beispielsweise kann das verarbeitete Bild ein Bild sein, dessen Auflösung erhöht oder reduziert wurde, ansonsten aber keine Modifikationen vorgenommen wurden. Die ursprüngliche Bildinformation bleibt in diesem Fall für zumindest einige Pixel erhalten. Das verarbeitete Bild kann in dieser Ausführungsform hinsichtlich der enthaltenen Bildinformation auch identisch zum originalen Bild sein. Mit dieser Ausführungsform kann auf zuverlässige und rekonstruierbare Weise eine Erkennung von Fehlstellen bewirkt werden.

Es kann vorgesehen sein, dass der Bildwert ein Grauwert oder eine Grauwertdifferenz jeweils benachbarter Pixel ist.

Da sich Fehlstellen als Bereiche des Bildes darstellen, die sich üblicherweise von anderen Bereichen des Bildes hinsichtlich ihrer Charakteristik im Infrarot unterscheiden (anwesendes oder abwesendes Produkt, andere Absorptions- und/oder Emissionseigenschaften im Infrarot und damit andere Grauwerte), kann hiermit eine zuverlässige Erkennung von Fehlstellen in der Verpackung oder dem Produkt erreicht werden.

Es kann vorgesehen sein, dass der Bereichserkennungsalgorithmus ein Blob-Algorithmus und/oder ein Kontrasterkennungsalgorithmus ist. Blob-Algorithmen und Kontrasterkennungsalgorithmen sind dem Fachmann grundsätzlich bekannt. Diese sind besonders geeignet, um zusammenhängende Bereiche nach bestimmten Kriterien zu identifizieren und auszuwerten. Blob-Algorithmen verwenden dabei einen vorgegebenen Schwellwert und ordnen Pixel oder Bereiche des Bildes danach, ob diese einen Bildwert oberhalb oder unterhalb dieses Schwellwertes aufweisen. Kontrasterkennungsalgorithmen vergleichen unmittelbar aneinander angrenzende Bereich hinsichtlich einer Veränderung in einem Bildwert (beispielsweise Grauwert). Liegt diese Veränderung über einem Schwellwert, kann damit ein Bereich des Bildes von einem anderen Bereich abgegrenzt werden. Zusammenhängende Pixel, für die sich die Bildwerte um nicht mehr als den Schwellwert unterscheiden, können von einem solchen Kontrasterkennungsalgorithmus dann als zu einem Bereich gehörend erkannt werden.

Eine vorteilhafte Ausgestaltung eines Kontrasterkennungsalgorithmus kann ein Mustererkennungsalgorithmus, insbesondere ein Kantenerkennungsalgorithmus sein. Dieser nutzt die beschriebene Differenz von Bildwerten benachbarter Pixel (beispielsweise eine Differenz von Grauwerten), um hieraus das Vorhandsein einer Kante (etwa innerhalb des Produkts oder der Verpackung) abzuleiten. Diese Kante muss keine tatsächliche Kante (beispielsweise eine äußere Kante der Verpackung) sein, sondern stellt im Allgemeinen einen im Wesentlichen entlang einer Linie vorhandenen Übergang der Eigenschaften der Verpackung oder des Produktes im infraroten Licht (Transmissions- oder Emissionseigenschaft beispielsweise) dar. Ein solcher Übergang kann auf eine Fehlstelle hindeuten. Wird eine solche Kante von einem entsprechenden Mustererkennungsalgorithmus erkannt, kann somit auf eine Fehlstelle zumindest im Bereich der erkannten Kante geschlossen werden. In einer Ausführungsform kann auch vorgesehen sein, dass der Mustererkennungsalgorithmus, insbesondere ein Kantenerkennungsalgorithmus genutzt wird, um Bereiche, die von entsprechenden Kanten vollständig umgeben sind, zu erkennen. Diese Bereiche können beispielsweise als Fehlstelle erkannt werden, wenn die erkannten Kanten alle auf der zu dem Bereich weisenden Seite einen Bildwert aufweisen, der von dem außerhalb liegenden Bereich abweicht und von diesem um einen Wert größer als der entsprechende Schwellwert verschieden ist. Mit dieser Ausführungsform kann das Erkennen von Bereichen bzw. Gruppen von Bereichen, die zu einer Fehlstelle gehören, durch das Erkennen von diese Bereiche von anderen Bereichen, die keine Fehlstellen darstellen, trennenden Kanten erreicht werden.

In einer Ausführungsform ist vorgesehen, dass die Fehlstellen eines von einem fehlerhaften Teil eines Produkts, einen fehlerhaften Teil einer Verpackung, einer fehlerhaften Siegelnaht umfassen. Die vorliegende Erfindung ist besonders geeignet, um solche Fehlstellen zu erkennen, was insbesondere die weitere Verarbeitung von Produkten und/oder Verpackungen vorteilhaft beeinflussen kann.

Die Bereiche können identisch sein, wobei optional die Bereiche 16 Pixel, 9 Pixel, 4 Pixel oder 1 Pixel groß sind. Die spezifische Wahl der Größe der Bereiche kann insbesondere vorteilhaft sein, wenn Fehlstellen beispielsweise erst bei größeren Gruppen von Pixeln zuverlässig erkannt werden können (größere Bereiche) oder wenn sich Fehlstellen selbst bei Betrachtung einzelner Pixel zuverlässig identifizieren lassen. Dass die Bereiche eine Größe von Pixeln aufweisen, ist dabei so zu verstehen, dass im verarbeiteten Bild für eine zusammenhängende Gruppe von Pixeln bestimmt wird (also beispielsweise Rechtecke oder Quadrate im Bild).

Es kann vorgesehen sein, dass die Vorrichtung eine Transporteinrichtung zum Transportieren von Verpackungen und/oder Produkten umfasst und dass die Transporteinrichtung so angeordnet und ausgebildet ist, dass sie Verpackungen und/oder Produkte an der Infrarot-Lichtquelle und dem Infrarotdetektor vorbeizuführen.

Bei der Transporteinrichtung kann es sich beispielsweise um ein Transportband handeln, auf dem die Verpackungen und/oder Produkte entlang einer Transportrichtung transportiert werden. Die Aufnahme des Bildes mittels des Infrarotdetektors kann entweder während des Transports der Verpackungen oder Produkte erfolgen, oder die Transporteinrichtung kann zum Aufnehmen des Bildes angehalten werden. Mit dieser Ausführungsform ist ein hoher Durchsatz von Verpackungen und/oder Produkten möglich.

In einer Ausführungsform ist vorgesehen, dass die Infrarot-Lichtquelle eine diffuse Infrarot-Lichtquelle ist oder dass die Vorrichtung einen Diffusor umfasst, um diffuses Auflicht und/oder Gegenlicht zu erzeugen und/oder dass der Infrarotdetektor eine Kamera, insbesondere eine Short-Wave-Infrared-Kamera (SWIR-Kamera) umfasst. Durch Verwenden einer diffusen Lichtquelle, beziehungsweise eines Diffusors, um diffuses Auflicht und/oder Gegenlicht zu erzeugen, kann im aufgenommenen Bild das Auftreten von Reflexen aufgrund punktartiger Lichtquellen bzw. Infrarotquellen vermieden werden. SWIR-Kameras sind besonders vorteilhaft zur hochauflösenden Aufnahme der notwendigen Infrarotbilder.

Erfindungsgemäß ist weiterhin ein Verfahren zum Erkennen von Fehlstellen einer Verpackung und/oder eines Produktes mittels einer Vorrichtung vorgesehen, die Vorrichtung umfassend eine Infrarot-Lichtquelle, einen Infrarotdetektor und eine Auswerteinrichtung, wobei der Infrarotdetektor und die Infrarot-Lichtquelle so angeordnet sind, dass der Infrarotdetektor ein Bild einer Verpackung und/oder eines Produkts in Auflicht und/oder Durchlicht aufnehmen kann, das Verfahren umfassend ein Erlangen eines verarbeiteten Bildes basierend auf dem Bild mit der Auswerteinrichtung, und, mittels der Auswerteinrichtung, Auswerten des verarbeiteten Bildes mittels eines Bereichserkennungsalgorithmus der Auswerteinrichtung und bestimmen, ob eine Gruppe von zusammenhängenden Bereichen im verarbeiteten Bild für jeden Bereich einen Bildwert oberhalb oder unterhalb eines Schwellwertes aufweist, Ausgeben einer für eine Fehlstelle indikative Information, wenn im verarbeiteten Bild wenigstens eine Gruppe von zusammenhängenden Bereichen vorhanden ist, für die jeder Bereich einen Bildwert oberhalb oder unterhalb des Schwellwertes aufweist.

Mit diesem Verfahren ist ein kostengünstiges und gleichzeitig zuverlässiges Erkennen von Fehlstellen möglich.

Es kann vorgesehen sein, dass das verarbeitete Bild zumindest einen Teil der Bildinformation des Bildes umfasst. Hierdurch kann die Auswertung im Wesentlichen auf dem aufgenommenen Bild basieren und dadurch vermieden werden, dass Information verloren geht. Dies gewährleistet eine zuverlässige Bestimmung von Fehlstellen.

Der Bereichserkennungsalgorithmus kann ein Blob-Algorithmus und/oder ein Kontrasterkennungsalgorithmus sein. Der Kontrasterkennungsalgorithmus kann vorteilhaft als Mustererkennungsalgorithmus und insbesondere als Kantenerkennungsalgorithmus ausgebildet sein. Diese Algorithmen sind besonders vorteilhaft geeignet, um zusammenhängende Bereiche basierend auf bestimmten Kriterien, hier das Überschreiten eines Schwellwertes, zu erkennen.

Es kann vorgesehen sein, dass die Fehlstellen eines von einem fehlerhaften Teil eines Produkts, einen fehlerhaften Teil einer Verpackung, einer fehlerhaften Siegelnaht umfassen. Die Erfindung kann hiermit vorteilhaft auf die Lebensmittelindustrie und Pharma- und Medizinindustrie angewandt werden.

Die Bereiche können identisch sein, wobei optional die Bereiche 16 Pixel, 9 Pixel, 4 Pixel oder 1 Pixel groß sind. Mit dieser Ausführungsform ist eine bedarfsabhängige, zuverlässige Erkennung von Bereichen, die möglicherweise Fehlstellen aufweisen, möglich.

In einer Ausführungsform ist vorgesehen, dass die Vorrichtung eine Transporteinrichtung zum Transportieren von Verpackungen und/oder Produkten umfasst und dass die Transporteinrichtung die Verpackungen und/oder Produkte an der Infrarot-Lichtquelle und dem Infrarotdetektor vorbeiführt. Hierdurch kann der Durchsatz bei gleichzeitig zuverlässiger Erkennung von Fehlstellen erreicht werden.

In einer Ausführungsform ist vorgesehen, dass die Infrarot-Lichtquelle eine diffuse Infrarot-Lichtquelle ist oder dass die Vorrichtung einen Diffusor umfasst, um diffuses Auflicht und/oder Gegenlicht zu erzeugen und/oder dass der Infrarotdetektor eine Kamera, insbesondere eine SWIR-Kamera umfasst. Mit dieser Ausführungsform können qualitativ hochwertige Bilder erzeugt werden, was die nachfolgende Erkennung von Fehlstellen verbessern kann.

### Kurze Beschreibung der Figuren

- Figur 1: zeigt eine Vorrichtung zum Erkennen von Fehlstellen einer Verpackung und/oder eines Produktes, gemäß einer Ausführungsform.
- Figur 2: zeigt ein Fließschema eines Verfahrens zum Erkennen von Fehlstellen einer Verpackung und/oder eines Produktes.

### Ausführliche Beschreibung

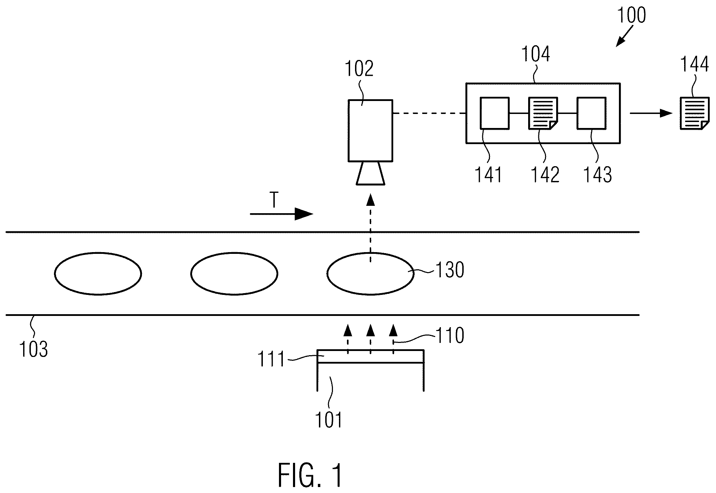

Figur 1 zeigt eine Vorrichtung 100 zum Erkennen von Fehlstellen einer Verpackung und/oder eines Produktes 130. Die Vorrichtung 100 umfasst eine Infrarot-Lichtquelle 101, mit der infrarotes Licht 110 in Richtung eines Produktes und/oder einer Verpackung 130 emittiert werden kann. Die Vorrichtung 100 umfasst weiterhin einen Infrarotdetektor 102, der das von der Verpackung und/oder dem Produkt 130 emittierte und/oder reflektierte Infrarot-Licht detektieren kann, um so ein Bild, insbesondere ein Infrarot-Bild, zu erzeugen.

Während die Erfindung nicht auf bestimmte Produkte oder Verpackungen beschränkt ist, soll im Folgenden allein zum Zwecke der einfacheren Beschreibung auf die Verarbeitung eines Bildes eines Produktes Bezug genommen werden. Es versteht sich, dass sämtliche der in diesem Zusammenhang beschriebenen Ausführungsformen auch auf Verpackungen oder Verpackungen mit einem eingefüllten Produkt anwendbar sind und entsprechend auch explizit vorgesehen sind.

Die Vorrichtung 100 kann zum Zwecke des Transports der Produkte 130 eine Transporteinrichtung 103 umfassen. Die Transporteinrichtung 103 kann beispielsweise als Förderband ausgebildet sein, auf dem Produkte 130 entlang einer Förderrichtung T transportiert werden können. Die Transporteinrichtung 103 ist diesbezüglich jedoch nicht beschränkt.

Die Vorrichtung umfasst weiterhin erfindungsgemäß eine Auswerteinrichtung 104 (beispielsweise in Form eines Computers mit zugeordnetem Prozessor und Speicher mit geeigneten Programminstruktionen zum Ausführen durch den Prozessor), mit der ein von dem Infrarotdetektor in Auflicht und/oder Durchlicht (abhängig von der Ausgestaltung der Infrarot-Lichtquelle und Positionierung derselben relativ zum Produkt und dem Infrarotdetektor) das aufgenommene Bild ausgewertet werden kann. Zu diesem Zweck erzeugt die Auswerteinrichtung zunächst ein verarbeitetes Bild 142 basierend auf dem aufgenommenen Bild.

Das verarbeitete Bild kann in einer Ausführungsform mit dem ursprünglichen Bild im Wesentlichen identisch sein oder so verarbeiteten werden, dass wenigstens ein Teil der ursprünglichen Bildinformation erhalten bleibt. Ist das verarbeitete Bild im Wesentlichen identisch mit dem ursprünglich aufgenommenen Bild, kann dies umfassen, dass beispielsweise ein Datenformat geändert wird, sodass eine weitere Verarbeitung des Bildes innerhalb der Auswerteinrichtung erfolgen kann, falls ein Algorithmus für die Verarbeitung des Bildes ein Format erfordert, das von dem ursprünglichen Datenformat, mit dem das Bild erzeugt wurde, abweicht.

Ist das Bild so verarbeitet, dass zumindest ein Teil der ursprünglichen Bildinformation erhalten bleibt, kann beispielsweise vorgesehen sein, dass Farbwerte oder Grauwerte, etwa zur Erhöhung des Kontrastes, mit einem Faktor skaliert werden und/oder die Auflösung des Bildes unter Beibehaltung zumindest eines Teils der ursprünglichen Bildinformation verändert wird. Alternativ oder zusätzlich kann auch vorgesehen sein, dass das ursprünglich aufgenommene Bild zum Erzeugen des verarbeiteten Bildes zugeschnitten wird, also Bereiche des aufgenommenen Bildes entfernt und/oder durch Pixel mit Standardwerten (beispielsweise mit Wert 0 oder 255 bei einem Graustufenbild) ersetzt werden, falls bekannt ist, dass diese Bereiche für die eigentliche Beurteilung der Verpackung irrelevant sind.

Das verarbeitete Bild 142 ist somit nicht zwingend mit dem aufgenommenen Bild identisch, umfasst aber zumindest einen Teil der ursprünglichen Bildinformation oder wurde höchstens so verändert, dass immer noch eine eineindeutige Zuordnung von zumindest einem Bildwert zumindest eines Teils des verarbeiteten Bildes zu einem korrespondierenden Bildwert eines korrespondierenden Teils des aufgenommenen Bildes existiert.

Um dieses verarbeitete Bild zu erzeugen, kann die Auswerteinrichtung 104 beispielsweise ein Bildverarbeitungsprogramm 141 umfassen, das das aufgenommene Bild entsprechend vorgegebener Anweisungen bzw. Programminstruktionen modifizieren kann. Es kann besonders vorteilhaft vorgesehen sein, dass eine Verarbeitung des Bildes eine verglichen mit dem aufgenommenen Bild zuverlässigere Erkennung von Fehlstellen erlaubt, beispielsweise indem Kontraste oder Farbunterschiede in dem verarbeiteten Bild verstärkt werden.

Auf diese Weise erzeugt die Auswerteinrichtung basierend auf dem ursprünglichen Bild eine Datenstruktur (beispielsweise in Form einer Matrix), in der Bereichen des Originalbildes eindeutig bearbeitete oder verarbeitete Bereiche zugeordnet sind. Die Matrix kann dabei in jedem Eintrag wenigstens einen Bildwert (beispielsweise einen Farbwert oder einen Kontrastwert) oder auch mehrere Bildwerte aufweisen. Das verarbeitete Bild kann, wie beschrieben, die Form einer Matrix A aufweisen, wobei die Matrix-Einträge Aᵢⱼ einen Bildwert enthalten. Jeder Wert Aᵢⱼ der Matrix steht somit für einen Bereich (insbesondere einen Pixel oder eine Gruppe von Pixeln) des Originalbildes und ordnet diesem eindeutig einen Bildwert zu.

Die Auswerteinrichtung 104 umfasst weiterhin einen Bereichserkennungsalgorithmus 143 wie beispielsweise einen Blob-Algorithmus oder einen Kontrasterkennungsalgorithmus. Diesem Bereichserkennungsalgorithmus wird das verarbeitete Bild 142 zur Verfügung gestellt, um dieses weiter auszuwerten. Der Bereichserkennungsalgorithmus kann dann erfindungsgemäß basierend auf dem verarbeiteten Bild bestimmen, ob eine Gruppe von zusammenhängenden Bereichen (also Bereiche des Originalbildes, denen im verarbeiteten Bild jeweils ein Bildwert zugeordnet ist) existiert, in der jeder Bereich jeweils, also jeder Bereich der zusammenhängenden Bereiche, einen Bildwert unterhalb und/oder oberhalb eines Schwellwerts aufweist. Der Bereichserkennungsalgorithmus kann also prüfen, ob zusammenhängende, bzw. benachbarte Einträge der Matrix A jeweils Bildwerte aufweisen, die oberhalb und/oder unterhalb eines Schwellwerts liegen. Im Falle der Ausführungsform des Bereichserkennungsalgorithmus als Kontrasterkennungsalgorithmus kann diese Prüfung auch oder alternativ umfassen, dass festgestellt wird, ob angrenzende Bereiche sich hinsichtlich eines Bildwertes um einen Schwellwert unterscheiden, also eine Differenz zwischen Bildwerten von Bereichen oberhalb und/oder unterhalb eines vorgegebenen Schwellwertes liegt. Diese Ausführungsform soll von der oben beschriebenen Feststellung, dass zusammenhängende Bereiche Bildwerte aufweisen, die oberhalb und/oder unterhalb eines Schwellwertes liegen, mit umfasst sein. Diese Ausführungsform erkennt Fehlstellen nicht unmittelbar anhand der Erkennung von Gruppen zusammenhängender Bereiche, sondern implizit durch die Feststellung, dass Regionen, also Gruppen zusammenhängender Bereiche, an ihren jeweiligen Grenzen einen Sprung oder starke Veränderung des Bildwertes erfahren. Dies deutet auf eine Fehlstelle hin.

Stellt die Auswerteinrichtung mittels des Bereichserkennungsalgorithmus fest, dass eine solche Gruppe von zusammenhängenden Bereichen existiert, für die die Bildwerte oberhalb und/oder unterhalb eines Schwellwertes liegt (bzw. die Different der Bildwerte benachbarter Gruppen oberhalb oder unterhalb des Schwellwertes liegt), kann die Auswerteinrichtung dann erkennen, dass tatsächlich eine Fehlstelle vorliegt und/oder diese eine Größe aufweist, die für die weitere Behandlung des Produktes relevant ist (beispielsweise ein Aussortieren des Produktes erforderlich macht).

Die Auswerteinrichtung 104 kann dann eine Information 144 ausgeben, die indikativ für das Vorhandensein einer Fehlstelle in dem Produkt ist. Die Information 144 kann beispielsweise als Anzeige auf einem Display ausgegeben werden oder kann auch in Form eines Steuerbefehls an eine andere Einrichtung übergeben werden. Die andere Einrichtung kann dann beispielsweise basierend auf diesem Steuerbefehl gesteuert werden, um eine weitere Verarbeitung des Produktes, für das ein Vorhandensein einer Fehlstelle erkannt wurde, auszusortieren oder die weitere Bearbeitung dieses Produktes nicht durchzuführen.

Um eine möglichst zuverlässige Erkennung möglicher Fehlstellen in dem Bild des Produktes 130 zu ermöglichen, kann vorteilhaft vorgesehen sein, dass die Infrarot-Lichtquelle 101 eine diffuse Infrarot-Lichtquelle ist. Hierdurch wird beim Erstellen des Bildes verhindert, dass das Bild Reflexe (zu helle oder zu dunkle Stellen in dem Infrarotbild) aufweist, die fälschlicherweise beim Erstellen des verarbeiteten als Bereiche identifiziert werden könnten, die eine Fehlstelle darstellen. Ist eine diffuse Infrarot-Lichtquelle 101 nicht vorgesehen, so kann alternativ vorgesehen sein, dass einer nicht diffusen Infrarot-Lichtquelle ein Diffusor 111 zugeordnet wird, der die von der Infrarot-Lichtquelle emittierte Infrarotstrahlung in diffuse Infrarotstrahlung 110 umwandelt, bevor diese das Produkt passiert und von dem Infrarotdetektor erkannt wird.

In der Figur 1 ist die Infrarot-Lichtquelle auf der dem Produkt gegenüberliegenden Seite des Infrarotdetektors 102 angeordnet. Diese Anordnung ist so nicht zwingend. Die in Figur 1 dargestellte Anordnung bewirkt, dass das Produkt in Durchlicht von dem Infrarotdetektor detektiert wird. Um dies zu gewährleisten, kann die Transporteinrichtung 103 als transparente (zumindest für Infrarotstrahlung transparente) Transporteinrichtung ausgeführt sein oder einen Bereich umfassen, der für Infrarotstrahlung transparent ist, sodass ein Bestrahlen der Produkte in Durchlicht möglich ist.

Alternativ kann auch vorgesehen sein (hier nicht dargestellt), dass die Infrarot-Lichtquelle auf derselben Seite des Produktes angeordnet ist wie der Infrarotdetektor 102. In diesem Fall ist die Infrarot-Lichtquelle so angeordnet, dass sie das Infrarotlicht in Richtung des Produktes 130 emittiert und das reflektierte Infrarotlicht von dem Infrarotdetektor 102 erfasst werden kann.

Der Infrarotdetektor kann insbesondere eine Kamera umfassen. Besonders bevorzugt ist eine SWIR-Kamera, damit mit dieser gut aufgelöste Infrarotbilder zu geringen Kosten erzeugt werden können.

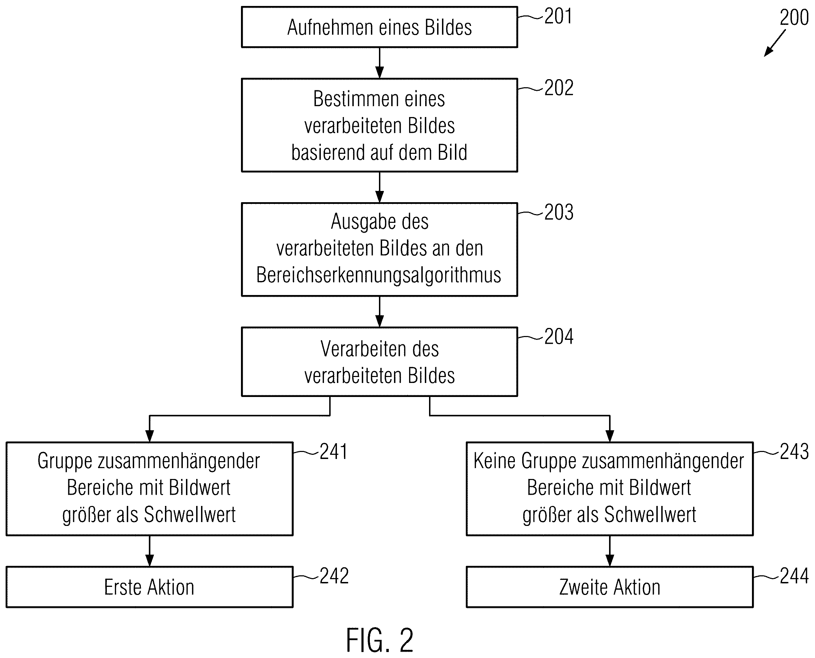

Figur 2 zeigt ein Fließschema einer Ausführungsform eines Verfahrens 200 zum Bestimmen von Fehlstellen einer Verpackung und/oder eines Produktes. Wie bereits oben ausgeführt, wird im Folgenden nur Bezug auf das Bestimmen und Verarbeiten eines Bildes eines Produktes genommen, wohingegen die Erfindung diesbezüglich nicht beschränkt ist und auch das Aufnehmen eines Bildes einer Verpackung und/oder einer Verpackung mit darin eingefülltem Produkt entsprechend mitumfasst ist.

Das Verfahren beginnt mit einem Schritt 201, bei dem ein Bild eines Produktes im Infrarotlicht aufgenommen wird. Dies kann, wie bereits beschrieben, entweder in Gegenlicht oder Auflicht erfolgen und die Erfindung ist diesbezüglich nicht beschränkt. Die Auflösung des Bildes ist grundsätzlich beliebig, kann jedoch möglichst hoch sein, beispielsweise 1024 x 768 Pixeln oder 2048 x 1080 Pixeln oder ähnliches betragen.

Dieses Bild wird dann der Auswerteinrichtung zur Verfügung gestellt, die im Schritt 202 basierend auf dem Bild ein verarbeitetes Bild erstellt. Wie bereits beschrieben, handelt es sich bei diesem verarbeiteten nicht zwingend um ein Bild, dessen Bildinformation identisch zu dem ursprünglich aufgenommenen Bild ist. Stattdessen kann das verarbeitete Bild in Form einer beliebigen Datenstruktur wie beispielsweise einer Matrix vorliegen. Die Information des verarbeiteten Bildes umfasst zumindest einen Bildwert (etwa einen Grauwert), der einem bestimmten Bereich des Originalbildes zugeordnet ist. Beispielsweise kann die Datenstruktur jedem Pixel des Bildes einen entsprechenden Bildwert zuordnen. Alternativ kann die Datenstruktur bzw. das verarbeitete Bild auch einem Teilbereich des ursprünglichen Bildes jeweils einen Bildwert zuordnen (beispielsweise entsprechend einem Mittelwert der Bildwerte des ursprünglichen Bildes). Der Teilbereich kann eine Vielzahl von Pixeln des ursprünglichen Bildes umfassen, wie beispielsweise 4 Pixel, 9 Pixel oder 16 Pixel. Diesen wird dann gemeinsam im verarbeiteten Bild ein entsprechender Bildwert zugeordnet. Das verarbeitete Bild ist zumindest so aufgebaut, dass jeder Bildwert in dem verarbeiteten Bild einem bestimmten Bereich des ursprünglichen Bildes (insbesondere dessen Position) zugeordnet wird und insbesondere zumindest in einem Teil des verarbeiteten Bildes die ursprüngliche Bildinformation des ursprünglichen Bildes erhalten bleibt oder zumindest ein Teil des verarbeiteten Bildes zumindest einen Bildwert umfasst, der eine eineindeutige Zuordnung eines Bildwertes eines korrespondierenden Bereichs des ursprünglichen Bildes erlaubt. Besteht das ursprüngliche Bild beispielsweise aus einer Matrix von Pixeln mit Pixelwerten Bᵢⱼ, so kann das verarbeitete Bild in Darstellung einer Matrix Matrixwerte Aᵢⱼ umfassen, wobei die Indizes i, j des verarbeiteten Bildes zu den Indizes i, j der Pixel des ursprünglichen Bildes zugeordnet sind. Das heißt also, dass in derselben Anordnung der Pixel des Originalbildes in dem verarbeiteten Bild "Pixel" in Form von oder umfassend Bildwerte für jeden entsprechenden Pixel des ursprünglichen Bildes vorhanden sind. Dies erlaubt eine spätere Erkennung von Bereichen des Bildes, die auf eine Fehlstelle hindeuten, ohne dass hierfür das ursprünglich aufgenommene Bild noch notwendig ist.

Das verarbeitete Bild wird dann im Schritt 203 an den Bereichserkennungsalgorithmus übergeben. Der Bereichserkennungsalgorithmus kann, wie bereits beschrieben, als Blob-Algorithmus und/oder Kontrasterkennungsalgorithmus ausgeführt sein oder diese umfassen. Die folgende Beschreibung diskutiert einen Bereichserkennungsalgorithmus, der zusammenhängende Bereiche aufgrund gleicher Bildwerte bestimmt und somit kein Kontrasterkennungsalgorithmus ist. Diese Ausführungsformen sind jedoch auf einen Kontrasterkennungsalgorithmus gleichsam anwendbar mit der Maßgabe, dass dieser Grenzen zwischen zusammenhängenden Gruppen aufgrund von Veränderungen im Kontrast erkennt und nicht aufgrund von übereinstimmenden Bildwerten. Dabei wird dann die Veränderung im Kontrast aneinander angrenzender Bereiche verglichen. Ist diese Differenz unterhalb eines Grenzwertes, kann festgestellt werden, dass die betreffenden Bereiche Teile des Produktes mit gleicher Qualität darstellen. Ist die Differenz größer als ein Schwellwert, so gehören die betreffenden angrenzenden Bereiche zu Teilen des Produktes mit unterschiedlicher Qualität, was dann genutzt werden kann, um zu erkennen, dass zumindest einer dieser Bereiche zu einer Fehlstelle gehört.

Der Bereichserkennungsalgorithmus verarbeitet im Schritt 204 das verarbeitete Bild. Dazu prüft der Bereichserkennungsalgorithmus, ob Bereiche im verarbeiteten Bild existieren, die zusammenhängen und für jeden Bereich dieser Gruppe von Bereichen der zugehörige Bildwert größer oder kleiner als ein vorgegebener Schwellwert ist.

Im Sinne des vorangegangenen Beispiels des verarbeiteten als Matrix sind die Bereiche Matrix-Einträge Aᵢⱼ des verarbeiteten Bildes. Zusammenhängende Bereiche im verarbeiteten Bild ergeben sich somit aus Matrix-Einträgen, die jeweils zumindest paarweise benachbart sind. Ausgehend von einem Matrix-Eintrag Aᵢⱼ sind zu diesem im Sinne einer Ausführungsform benachbarte Bereiche bzw. Matrix-Einträge, solche mit Index i±1,j oder i,j±1. Einträge der Form A_{i±1j±1} können ebenfalls als benachbart angesehen werden, sind jedoch in der Diagonale der Matrix zum Eintrag Aᵢⱼ versetzt. Im Originalbild bedeutet dies, dass diese Bereiche nur an einer Ecke zusammenhängen.

Alternativ dazu, dass jeder der Bereiche einen Bildwert größer oder kleiner als der Schwellwert aufweist, kann auch vorgesehen sein, dass ein durchschnittlicher Bildwert einer zusammenhängenden Gruppe von Bereichen im verarbeiteten Bild größer oder kleiner als ein gegebener Schwellwert ist.

Erkennt der Bereichserkennungsalgorithmus eine Gruppe zusammenhängender Bereiche mit einem Bildwert größer (oder kleiner) als dem entsprechenden Schwellwert (Schritt 241), kann eine erste Aktion 242 erfolgen. Diese erste Aktion kann insbesondere darin bestehen, dass die Auswerteinrichtung dieser Gruppe zusammenhängender Bereiche das Vorhandensein einer Fehlstelle zuordnet. Zusätzlich kann diese Information beispielsweise an einen Bediener ausgegeben werden, sodass dieser erkennen kann, dass ein Produkt eine Fehlstelle aufweist. Der Bediener kann dann beispielsweise dieses Produkt aus der Transporteinrichtung entnehmen oder eine Vorrichtung steuern, die das entsprechend fehlerhafte Produkt aus der Transporteinrichtung entnimmt.

Alternativ kann die Information hinsichtlich der erkannten Fehlstelle auch als Steuersignal für eine Einrichtung verwendet werden, die das fehlerhafte Produkt aus der Transporteinrichtung entnehmen kann.

Es versteht sich, dass der Bereichserkennungsalgorithmus auch mehrere Gruppen zusammenhängender Bereiche erkennen kann, für die der Bildwert oberhalb (oder unterhalb) eines Schwellwertes liegt. Dies bedeutet letztlich, dass ein Produkt mehrere Fehlstellen aufweist, die vom Bereichserkennungsalgorithmus erkannt werden. Dies ändert nichts am weiteren Vorgehen, insbesondere an dem Ausführen der ersten Aktion 242. Jedoch kann vorgesehen sein, dass die Auswerteinrichtung das Auftreten von Fehlstellen und deren Anzahl pro Produkt speichert und über die Zeit auswertet. Wird bei einer zeitlichen Auswertung beispielsweise erkannt, dass die Häufigkeit von Fehlstellen und/oder die Anzahl von Fehlstellen an Produkten mit der Zeit zunimmt (beispielsweise eine erste Anzahl von Produkten wies im Durchschnitt bei jedem hundertsten Produkt eine Fehlstelle auf, eine zweite Anzahl von Produkten, die zu einer späteren Zeit untersucht wurde, wies jedoch im Durchschnitt alle fünfzig Produkte eine Fehlstelle auf oder alle zwanzig Produkte zwei Fehlstellen), so kann die Auswerteinrichtung auch diese Information beispielsweise als durchschnittlichen Wert für das Feststellen von Fehlstellen eines Produktes und/oder als durchschnittlicher Wert für die Anzahl der Fehlstellen pro Produkt an einen Bediener ausgeben.

Dieser kann dann beispielsweise feststellen, ob sich im Betrieb einer stromauf der Vorrichtung zum Erkennen von Fehlstellen angeordneten Einrichtung eine Verschlechterung eingestellt hat und entsprechende Schritte zu deren Beheben (beispielsweise Wartungsarbeiten oder Reparaturarbeiten) durchführen. Der Bediener kann hierzu von der Auswerteinrichtung auch durch eine entsprechende Information angewiesen werden.

Erkennt der Bereichserkennungsalgorithmus hingegen für ein Produkt keine Gruppe zusammenhängender Bereiche, deren jeweilige Bildwerte größer (oder kleiner) als der Schwellwert sind oder deren durchschnittlicher Bildwert für das Vorhandensein einer Fehlstelle größer als ein entsprechender Schwellwert ist (Schritt 243), so kann eine zweite Aktion 244 erfolgen. Diese zweite Aktion 244 kann beispielsweise eine aktualisierte Anzeige an einen Bediener umfassen, dass der Betrieb der Vorrichtung ordnungsgemäß funktioniert. Es kann aber auch vorgesehen sein, dass die zweite Aktion 244 keine tatsächliche Aktion umfasst, sondern lediglich ein Fortfahren des Betriebs bewirkt.

Es versteht sich, dass in obiger Ausführungsform eine Unterscheidung zwischen Bereichen, die zu einer Fehlstelle gehören und Bereichen, die nicht zu einer Fehlstelle gehören, basierend auf einer Feststellung stattfindet, dass die Bereiche einen Bildwert größer oder kleiner als der Schwellwert aufweisen. Ob Bereiche mit Bildwerten größere als der Schwellwert als eine Fehlstelle anzeigend zu bewerten sind oder ob Bereiche mit Bildwerten kleiner als der Schwellwert als Fehlstelle zu bewerten sind, kann vor oder bei Inbetriebnahme festgelegt werden, genau wie der tatsächliche numerische Wert des Schwellwertes. Erfindungsgemäß findet die Unterscheidung zwischen Bereiche, die eine Fehlstelle anzeigen und Bereichen, die zu einem "normalen", fehlstellenfreien Teil des Produktes gehören in jedem Fall durch die Feststellung statt, dass Bildwerte von einigen Bereichen, die zu Fehlstellen gehören, von Bildwerten von Bereichen, die nicht zu Fehlstellen gehören, durch einen Schwellwert des Bildwertes voneinander "separiert" sind, sodass ein Vergleich der Bildwerte mit dem Schwellwert eine Zuordnung erlaubt, ob der jeweilige Bereich zu einer Fehlstelle gehört oder nicht.

Das im Zusammenhang mit Figur 2 beschriebene Verfahren wird bevorzugt für jedes Produkt, das an dem Infrarotdetektor vorbeigeführt wird, durchgeführt, sodass jedes Produkt auf Fehlstellen hin untersucht wird.

Zwar erlaubt entsprechend obiger Beschreibung das verarbeitete Bild grundsätzlich eine Feststellung, ob ein gegebener Bereich zu einer Fehlstelle gehören könnte oder nicht. Ob es sich bei den Bereichen aber tatsächlich um Fehlstellen handelt kann zuverlässig nur beurteilt werden, wenn "ausreichend viele" Bereiche, die zusammenhängen, einen entsprechenden, auf eine Fehlstelle hindeutenden Bildwert umfassen. Liegen solche Gruppen zusammenhängender Bereiche nicht vor, kann es sich bei einem einzelnen Bereich mit einem entsprechenden Bildwert auch lediglich um ein Artefakt im ursprünglichen Bild handeln, ohne dass eine Fehlstelle vorliegt. Entsprechend falsch-negative Erkennungen von Fehlstellen werden durch die nachgelagerte Auswertung des verarbeiteten Bildes mit dem Bereichserkennungsalgorithmus vermieden. Denn dieser prüft eine verglichen mit den einzelnen Bereichen im verarbeiteten Bild größere Region auf etwaige Abweichungen (da Gruppen zusammenhängender Bereiche im verarbeiteten Bild identifiziert werden, die Bildwerte oberhalb oder unterhalb des Schwellwertes aufweisen). Hierdurch wird das Risiko, dass eine Fehlstelle fälschlicherweise aufgrund von Reflexen oder Artefakten im Originalbild erkannt werden, reduziert.

## Patentansprüche

1. Vorrichtung (100) zum Erkennen von Fehlstellen einer Verpackung und/oder eines Produktes (130), die Vorrichtung umfassend eine Infrarot-Lichtquelle (101), einen Infrarotdetektor (102) und eine Auswerteinrichtung (104), wobei der Infrarotdetektor und die Infrarot-Lichtquelle so angeordnet sind, dass der Infrarotdetektor ein Bild einer Verpackung und/oder eines Produktes (130) in Auflicht und/oder Durchlicht aufnehmen kann, und wobei die Auswerteinrichtung (104) ausgebildet ist, das Bild zu verarbeiten und mittels eines Bereichserkennungsalgorithmus (143) das verarbeitete Bild auszuwerten und zu bestimmen, ob eine Gruppe von zusammenhängenden Bereichen im verarbeiteten Bild für jeden Bereich einen Bildwert oberhalb oder unterhalb eines Schwellwertes aufweist, und eine für eine Fehlstelle indikative Information (144) auszugeben, wenn im verarbeiteten Bild wenigstens eine Gruppe von zusammenhängenden Bereichen vorhanden ist, für die jeder Bereich einen Bildwert oberhalb oder unterhalb des Schwellwertes aufweist.

2. Vorrichtung (100) nach Anspruch 1, wobei das verarbeitete Bild zumindest einen Teil der Bildinformation des Bildes umfasst.

3. Vorrichtung nach Anspruch 1, wobei der Bildwert ein Grauwert oder eine Grauwertdifferenz jeweils benachbarter Pixel ist.

4. Vorrichtung (100) nach einem der Ansprüche 1 bis 3, wobei der Bereichserkennungsalgorithmus (143) ein Blob-Algorithmus und/oder ein Kontrasterkennungsalgorithmus ist.

5. Vorrichtung (100) nach einem der Ansprüche 1 bis 4, wobei die Fehlstellen eines von einem fehlerhaften Teil eines Produkts, einen fehlerhaften Teil einer Verpackung, einer fehlerhaften Siegelnaht umfassen.

6. Vorrichtung (100) nach einem der Ansprüche 1 bis 5, wobei die Bereiche identisch sind, wobei optional die Bereiche 16 Pixel, 9 Pixel, 4 Pixel oder 1 Pixel groß sind.

7. Vorrichtung (100) nach einem der Ansprüche 1 bis 6, wobei die Vorrichtung eine Transporteinrichtung (103) zum Transportieren von Verpackungen und/oder Produkten umfasst und wobei die Transporteinrichtung so angeordnet und ausgebildet ist, dass sie Verpackungen und/oder Produkte an der Infrarot-Lichtquelle (101) und dem Infrarotdetektor (102) vorbeizuführen.

8. Vorrichtung (100) nach einem der Ansprüche 1 bis 7, wobei die Infrarot-Lichtquelle (101) eine diffuse Infrarot-Lichtquelle ist oder wobei die Vorrichtung einen Diffusor (111) umfasst, um diffuses Auflicht und/oder Gegenlicht zu erzeugen; und/oder
wobei der Infrarotdetektor (102) eine Kamera, insbesondere eine SWIR-Kamera umfasst.

9. Verfahren zum Erkennen von Fehlstellen einer Verpackung und/oder eines Produktes mittels einer Vorrichtung (100), die Vorrichtung (100) umfassend eine Infrarot-Lichtquelle (101), einen Infrarotdetektor (102) und eine Auswerteinrichtung (104), wobei der Infrarotdetektor und die Infrarot-Lichtquelle so angeordnet sind, dass der Infrarotdetektor ein Bild einer Verpackung und/oder eines Produkts in Auflicht und/oder Durchlicht aufnehmen kann, das Verfahren umfassend ein Erlangen eines verarbeiteten Bildes basierend auf dem Bild mit der Auswerteinrichtung (104), und, mittels der Auswerteinrichtung, Auswerten des verarbeiteten Bildes mittels eines Bereichserkennungsalgorithmus (143) der Auswerteinrichtung und bestimmen, ob eine Gruppe von zusammenhängenden Bereichen im verarbeiteten Bild (142) für jeden Bereich einen Bildwert oberhalb oder unterhalb eines Schwellwertes aufweist, Ausgeben einer für eine Fehlstelle indikative Information (144), wenn im verarbeiteten Bild wenigstens eine Gruppe von zusammenhängenden Bereichen vorhanden ist, für die jeder Bereich einen Bildwert oberhalb oder unterhalb des Schwellwertes aufweist.

10. Verfahren nach Anspruch 9, wobei das verarbeitete Bild zumindest einen Teil der Bildinformation des Bildes umfasst.

11. Verfahren nach Anspruch 9 oder 10, wobei der Bereichserkennungsalgorithmus (143) ein Blob-Algorithmus und/oder ein Kontrasterkennungsalgorithmus ist.

12. Verfahren nach einem der Ansprüche 9 bis **11,** wobei die Fehlstellen eines von einem fehlerhaften Teil eines Produkts, einen fehlerhaften Teil einer Verpackung, einer fehlerhaften Siegelnaht umfassen.

13. Verfahren nach einem der Ansprüche 9 bis 12, wobei die Bereiche identisch sind, wobei optional die Bereiche 16 Pixel, 9 Pixel, 4 Pixel oder 1 Pixel groß sind.

14. Verfahren nach einem der Ansprüche 9 bis 13, wobei die Vorrichtung (100) eine Transporteinrichtung (103) zum Transportieren von Verpackungen und/oder Produkten umfasst und wobei die Transporteinrichtung die Verpackungen und/oder Produkte an der Infrarot-Lichtquelle (101) und dem Infrarotdetektor (102) vorbeiführt.

15. Verfahren nach einem der Ansprüche 9 bis 14, wobei die Infrarot-Lichtquelle (101) eine diffuse Infrarot-Lichtquelle ist oder wobei die Vorrichtung einen Diffusor (111) umfasst, um diffuses Auflicht und/oder Gegenlicht zu erzeugen; und/oder
wobei der Infrarotdetektor (102) eine Kamera, insbesondere eine SWIR-Kamera umfasst.
